(19) Europäisches Patentamt / European Patent Office / Office européen des brevets

(11) **EP 3 029 996 B1**

(12) **EUROPEAN PATENT SPECIFICATION**

(45) Date of publication and mention
of the grant of the patent:
**04.10.2017 Bulletin 2017/40**

(51) Int Cl.:
**H04W 36/32** *(2009.01)*      *H04W 36/00* *(2009.01)*
**H04W 36/30** *(2009.01)*

(21) Application number: **15197011.8**

(22) Date of filing: **30.11.2015**

(54) **TARGET CELL SELECTION DURING HANDOVER**

ZIELZELLENAUSWAHL WÄHREND DER ÜBERGABE

SÉLECTION DE CELLULE CIBLE PENDANT UN TRANSFERT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2014 IN 3854MU2014**

(43) Date of publication of application:
**08.06.2016 Bulletin 2016/23**

(73) Proprietor: **Tata Consultancy Services Limited
Maharashtra (IN)**

(72) Inventors:
- **BIYANI, Nidhi Deepak
  400066 Mumbai (IN)**
- **KANDOLCAR, Pundalik Mahadeo
  400066 Mumbai (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2014 045 500**

- "3rd Generation Partnership Project; Technical Specification Group GSM/EDGE Radio Access Network; Radio subsystem link control (Release 12)", 3GPP STANDARD; 3GPP TS 45.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. GERAN WG1, no. V12.3.0, 5 March 2014 (2014-03-05), pages 1-153, XP050769686, [retrieved on 2014-03-05]
- "3rd Generation Partnership Project; Technical Specification Group Core Network and Terminals; Handover procedures (Release 12)", 3GPP STANDARD; 3GPP TS 23.009, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.0.0, 30 September 2014 (2014-09-30), pages 1-301, XP050926330, [retrieved on 2014-09-30]
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.3.0, 23 September 2014 (2014-09-23), pages 1-378, XP050925644, [retrieved on 2014-09-23]

**(Cont. next page)**

- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.3.0, 18 September 2014 (2014-09-18), pages 1-215, XP050925619, [retrieved on 2014-09-18]

- S K Shome ET AL: "Performance Evaluation of Different Averaging based Filter Designs Using Digital Signal Processor and its Synthesis on FPGA", International Journal of Signal Processing Image Processing and Pattern Recognition, 3 September 2012 (2012-09-03), XP055262773, Retrieved from the Internet: URL:http://www.sersc.org/journals/IJSIP/vol5_no3/6.pdf [retrieved on 2016-04-05]

**Description**

REFERENCE TO RELATED APPLICATIONS

FIELD OF INVENTION

The present disclosure relates to a field of mobile/cellular communication systems. More particularly, the present disclosure relates to a method and system for selecting a target cell during handover procedure in a cellular communication system.

BACKGROUND

Recently, huge demands to deliver true mobile broadband services have motivated 3rd generation partnership project (3GPP) Long Term Evolution (LTE) system. The LTE system is a mobile communication system evolved from a Universal mobile Telecommunications System (UMTS), and a standard has been established by 3rd Generation Partnership Project (3GPP).

As known, the LTE system architecture may be classified into an Evolved UMTS Terrestrial Radio Access Network (E-UTRAN) and an Evolved Packet Core (EPC). The E-UTRAN may include a User Equipment (UE) and an Evolved NodeB (eNB, base station). The EPC may include a Mobility Management Entity (MME) performing a control-plane function and a Serving Gateway (S-GW) performing a user-plane function. Generally, the E-UTRAN network may include one or more evolved UTRAN NodeBs (eNodeB). Each eNodeB may be capable of communicating with every other eNodeB in the network. As known, the eNodeB handles transmission and reception of signals associated with a set of cells.

The mobile communication system in a geographical area may include a number of cells. For example, a User Equipment (UE) or a mobile located in the geographical area may be served by an eNodeB/base station in that area. The eNodeB/base station may be coupled to a node in the mobile communication system such that communication data can be routed between the UE and other equipment. During a communication, the UE may have to switch from one cell to another. The mobile communication may have to switch so as to provide better service. The switching of cells is termed as handover. There are difficulties in determining criteria for triggering the handover process and selecting another cell for connecting. In one example, a handover process may be triggered by the User Equipment (UE) based on triggers defined by the network. In another example, the handover process may be triggered by a serving eNodeB. The triggers may include hysteresis (HOM), and Time To Trigger (TTT). The handover process may be triggered when values of Reference Signal Received Power (RSRP) from neighbor cells is higher than the serving cell.

Generally, the handover process may be triggered by a measurement report sent from the UE to Evolved NodeBs and the handover decision is taken by the serving eNodeB. The serving eNodeB may configure how the UE shall take measurements and trigger the measurement report to send to the eNodeB. There has been several handover decision algorithms proposed to use parameters configured in the measurement report while making the handover decision. However, the existing handover decision algorithms may consider analyzing a history of measurement reports to make the handover decision and do not consider calculating an average of measurement reports to make the handover decision. After sending the handover request, if a target cell sends an acknowledgement indicating failure of the handover, the serving cell may have to re-run the handover decision to determine another target cell. In order to re-run the handover decision, the handover decision algorithm may have to be re-executed. Further, the existing handover decision algorithms do not consider scaling factors of the UE at eNodeB which may lead to unnecessary handovers for the UEs moving with low speed or Radio Link Failures (RLF) for the UEs moving with high speed. One of the prior art article titled "3rd Generation Partnership Project; Technical Specification Group GSM/EDGE Radio Access Network; Radio Subsystem link control, 3GPP TS 45.008, V12.3.0" discloses radio sub-system link control aspects such as handover implemented in MS, BSS and MSC. The article also discloses radio link measurements used in the handover process and RF power control processes and BSS processing and threshold comparison for handover process. Another article titled "3rd Generation Partnership Project; Technical Specification Group Core Network and Terminals; Handover procedures, 3GPP TS 23.009, V12.0.0" contains detail description of the handover procedures in telecom networks. Another article titled-"3rd Generation Partnership Project; Technical Specification Group Radio Access Network; Evolved Universal Terrestrial Radio Access 3GPP TS 36.331, V12.3.0" discloses specifies Radio Resource Control protocol for the radio interface between UE and E-UTRAN as well as for the radio interface between RN and E-UTRAN. Radio related Information transported in a transparent Container between source eNB and target eNB upon inter eNB handover and between a source or target eNB and another System upon inter RAT handover is discussed. Still another article titled "3rd Generation Partnership Project; Technical Specification Group Radio Access Network; Evolved Universal Terrestrial Radio Access (E-UTRA) and Evolved Universal Terrestrial Radio Access Network (E-UTRAN) 3GPP TS 36.300" provides an overview and overall description of the E-UTRAN radio interface protocol architecture. Still another article titled-"Performance Evaluation of Different Averaging based Filter Designs Using Digital Signal Processor and its Synthesis on FPGA" by SK Shome describes application of Simple Moving Average and Exponentially Weighted Moving Average based signal filtering techniques on corrupted signal, having different signal to noise ratio to filter out noise front a discretely sampled signal. Performance evaluation of these techniques and verification through Simulation using MATLAB is discussed. Further, US 2014/045500 discloses methods for handover configuration. The dynamic determination of a handover trigger for triggering handover of a mobile terminal from source to a target base Station is based on Key Performance Indicators indicating a quality of wireless Services provided by the wireless network responsive to a particular handover trigger is disclosed.

SUMMARY

This summary is provided to introduce concepts related to systems and methods for selecting a target cell during a handover procedure at a serving cell and the concepts are further described below in the detailed description. This summary is not intended to identify essential features of the claimed subject matter nor is it intended for use in determining or limiting the scope of the claimed subject matter. The invention is defined in the independent claims. Embodiments of the invention are defined in the dependent claims

In one example useful for understanding the invention, a method for selecting a target cell during a handover procedure at a serving cell is disclosed. The method at the serving cell includes detecting a plurality of neighbor cells of the serving cell. The plurality of neighbor cell indicates a plurality of candidate cells for receiving a handover request from a serving eNodeB for a User Equipment (UE). The method further comprises receiving a plurality of measurement reports (MRs) at periodic interval times from the user equipment (UE). A measurement report of the plurality of MRs includes a Reference Signal Received Power (RSRP) values of the plurality of neighbor cells. The method further comprises assigning a weightage to the RSRP values of each MR of the plurality of MRs. The weightages assigned are incremental weightages and incremented for assignment to the RSRP values of the multiple MRs based on intervals of receiving of the each MR from the UE. The method further comprises calculating a weighted average of the RSRP values of the plurality of MRs for each neighbor cell of the plurality of neighbor cells over a periodic interval time. The weighted average is calculated based on the RSRP values and the incremental weightages assigned to the RSRP values. The method further comprises selecting a target cell from the plurality of neighbor cells to send a handover request. The neighbor cell from the plurality of neighbor cells having a highest weighted average of the RSRP values of the plurality of neighbor cells is selected as the target cell.

In one example useful for understanding the invention, a system for selecting a target cell during a handover procedure a serving cell is disclosed. The system comprises a controller and a memory coupled to the controller. The controller is capable of executing program instructions stored in the memory. The controller executes the program instructions to detect a plurality of neighbor cells. The controller further executes the program instructions to detect a plurality of neighbor cells of the serving cell. The plurality of neighbor cell indicates a plurality of candidate cells for receiving a handover request from a serving eNodeB for a User Equipment (UE). The system controller further executes the program instructions to receive a plurality of measurement reports (MRs) at periodic interval times from the user equipment (UE). A measurement report of the plurality of MRs includes a Reference Signal Received Power (RSRP) values of the plurality of neighbor cells. The controller further executes the program instructions to assign a weightage to the RSRP values of each MR of the plurality of MRs. The weightages assigned are incremental weightages and incremented for assignment to the RSRP values of the multiple MRs based on intervals of receiving of the each MR from the UE. The controller further executes the program instructions to calculate a weighted average of the RSRP values of the plurality of MRs for each neighbor cell of the plurality of neighbor cells over a periodic interval time. The weighted average is calculated based on the RSRP values and the incremental weightages assigned to the RSRP values. The controller further executes the program instructions to select a target cell from the plurality of neighbor cells to send a handover request. The neighbor cell from the plurality of neighbor cells having a highest weighted average of the RSRP values of the plurality of neighbor cells is selected as the target cell.

BRIEF DESCRIPTION OF DRAWINGS

The detailed description is provided with reference to the accompanying figures. In the figures, the left-most digit(s) of a reference number identifies the figure in which the reference number first appears. The same numbers are used throughout the drawings to refer like/similar features and components.

FIG. 1 illustrates a mobile communication service area, in accordance with an embodiment of the present disclosure.
FIG. 2 illustrates S1 and X2 interfaces in the 3GPP LTE system, in accordance with an embodiment of the present disclosure.
FIG. 3 illustrates the serving cell/eNodeB, in accordance with an embodiment of the present disclosure.

FIG. 4 illustrates a process flow of a handover procedure, in accordance with an embodiment of the present disclosure.

FIG. 5 illustrates simulation results for selecting a target cell, in accordance with an embodiment of the present disclosure.

FIG. 6 illustrates a method for selecting a target cell, in accordance with an embodiment of the present disclosure.

DETAILED DESCRIPTION

Systems and method for selecting a target cell during a handover procedure at a serving cell are disclosed. At first, the serving cell/eNodeB may detect a plurality of neighbor cells to select a target cell for UE handover. A Handover Request message may be sent from the serving cell to a target cell. From a list of the neighbor cells at the serving cell, a target cell/eNodeB is selected to which the handover request message may be sent from the serving cell/eNodeB. In order to send the handover request, the serving cell may receive a measurement report from the User Equipment (UE). The measurement report may include values associated with a Reference Signal Received Power (RSRP) of the plurality of neighbor cells.

After receiving the RSRP values of the neighbor cells, weightage/weights may be assigned to the RSRP values. Subsequently, based on the values associated with the RSRP and the weightage assigned, a weighted average of the RSRP for each neighbor cell may be calculated. Based on the weighted average, the target cell may be selected. The target cell may be selected to send the handover request. The target cell may be selected based on the neighbor cell comprising a highest weighted average of the RSRP. In other words, the target cell is selected based on the neighbor cell having the highest weighted average of RSRP of the plurality of neighbor cells. After selecting the target cell, the handover request message may be sent to the target cell.

While aspects of described system and method for selecting a target cell during a handover procedure at a serving cell may be implemented in different computing systems, environments, and/or configurations, the embodiments are described in the context of the following exemplary system.

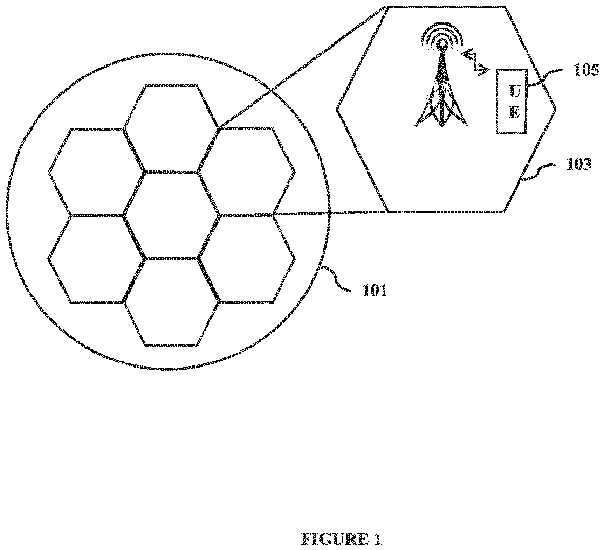

Referring now to FIG. 1, a mobile communication service area 101, such as an LTE system service area is shown. The mobile communication service area 101 may comprise a number of cells 103. In the mobile communication service area 101, a User Equipment (UE) 105 may be located in a cell 103 that may be served by an antenna in that cell. The antenna may be coupled to a node in the mobile communication system 101 to route communication data the UE 105 and other equipment through the mobile communication system 101.

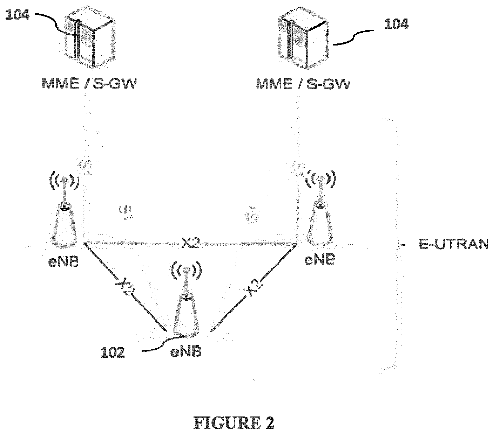

Referring to FIG.1 and FIG.2, a core network may be connected to one or more evolved UTRAN NodeBs (eNodeB) 102. Each eNodeB 102 may be capable of communicating with every other eNodeB 102 in the same network. One eNodeB 102 may connect to one or more antennas (not shown). The eNodeB 102 may be a logical node that handles transmission and reception of signals associated with a set of cells 103. In one implementation, the eNodeB 102 contains the antennas of the cells 103. In another implementation, the antennas of the cells 103 may belong to the eNodeB 102 but may not be located at the same antenna site. Therefore, one eNodeB 102 may be responsible for one or more cells 103.

The eNodeBs 102 in 3GPP LTE network may connect to each other via X2 interface as shown in FIG. 2. Each eNodeB 102 may communicate with an evolved packet core (EPC) (not shown) using a S1 interface. Specifically, the eNodeB 102 may communicate with a Mobility Management Entity (MME) 104 and a User plane entity (UPE) identified as Serving Gateway (S-GW) 104 using S1-C and S1-U for control plane and user plane, respectively.

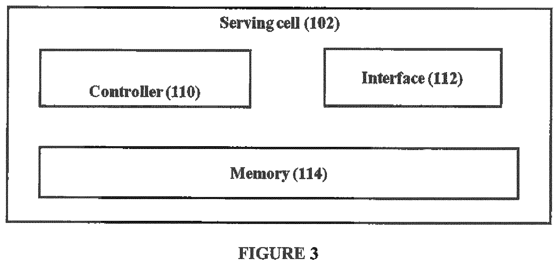

Referring to FIG. 3, in one embodiment, the eNodeB 102 may include a controller 110, an interface 112 and a memory 114. Further, the controller 110 may be implemented as one or more processors, microprocessors, microcomputers, microcontrollers, digital signal processors, central processing units, state machines, logic circuitries, and/or any devices that manipulate signals based on operational instructions. Among other capabilities, the controller 110 may be configured to fetch and execute computer-readable instructions stored in the memory 114.

The interface(s) 112 may include a variety of software and hardware interfaces, for example, a web interface, a Graphical User Interface (GUI), a Command Line Interface (CLI) and the like. The interface(s) 112 may be used for configuring the eNodeB 102.

The memory 114 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

The User Equipment (UE) 105 may also be referred to as a terminal, a mobile station, a subscriber unit, or the like. The UE 105 described herein may be for example, but not limited to, a cellular phone, a Personal Digital Assistant (PDA), a wireless modem, a wireless communication device, a handheld device, a laptop computer, a cordless phone, a Wireless Local Loop (WLL) station, or the like.

The following description will use the nomenclature used in the Long Term Evolution (LTE) of UTRAN. A mobile telephone 105 that changes serving cells 103 will be referred to as the UE 105, the eNodeB 102 that serves as a source may be referred as serving cell/eNodeB and eNodesB such as an eNodeB 106a and an eNodeB 106b that may serve as candidate nodes for a target may be referred as target cell/eNodeB 106a/106b.

In order to select the target cell during a handover procedure at the serving cell/eNodeB 102, at first, the UE 105 may have to handover from the serving eNodeB 102 to the target eNodeB 106a. The handover may correspond to an incoming call, an outgoing call or a data session. The handover request may be sent for a plurality of reasons. For example, the handover request may occur when there is a weak communication between the UE 105 and the serving eNodeB 102 due to variations in channel quality, leaving a cell that is served by an eNodeB 102 and entering a new cell. In one example, the handover may be controlled by the UE 105. In another example, the handover may be controlled by the serving eNodeB 102. If the UE 105 initiates the handover, a UE-controlled handover may be performed. If the serving eNodeB 102 initiates the handover, a network-controlled handover may be performed.

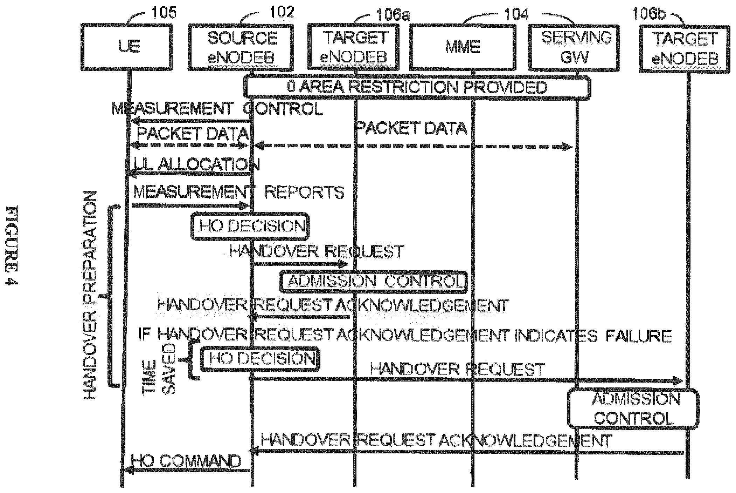

FIG. 4 illustrates a process flow of the handover procedure. FIG. 4 may be explained using FIG. 1, FIG. 2 and FIG. 3. At first, the UE 105 may be trigger sending Measurement Reports upon receiving a Measurement Control message (as a RRC Connection Reconfiguration) from the serving eNodeB 102. The serving eNodeB 102 may detect the neighboring cells 103 in the service area 101 from the MRs sent by the UE 105. Herein, the neighbor cells that are candidates cells for target cells are represented as neighbor cells 106a and 106b. The serving eNodeB 102 may configure the measurements from the UE 105 according to the RRC Connection Reconfiguration based on the eNodeB specified measurement configurations such as frequency, inter-RAT capabilities and others. Subsequently, the UE 105 may check the neighbor cells 103 for one or more conditions. In one example, the UE 105 may check if a neighbor cell 103 is barred or not barred. Further, the UE 105 may check if the neighbor cell 103 is reserved for operator use. Further, the UE 105 may check if UE membership status for Closed Subscriber Group (CSG) reported cells. Further, the UE 105 may check Public Land Mobile Network (PLMN), Mobility Management Entity Identifier (MMEI) and Tracking Area Identity (TAI) of the neighboring cells 103.

After checking the one or more conditions, the UE 105 may send a Measurement Report (MR) based on pre-defined rules. The pre-defined rules may be set by the measurement control message sent by the serving cell. In order to send the Measurement Report, the UE 105 may have to measure signal strength power and/or quality of the neighbor cells 103. In the LTE system, the UE 105 measures two parameters on reference signal i.e., Reference Signal Received Power (RSRP) and Reference Signal Received Quality (RSRQ). The RSRP value indicates power of the LTE Reference Signals spread over the full bandwidth and narrow band. Further, the Reference Signal Received Power (RSRP) may be defined as the linear average over the power contributions (in [W]) of the resource elements that carry cell-specific reference signals within the considered measurement frequency bandwidth. Reference point for the RSRP values may be a resource element in which the reference signal is being transmitted.

In order to illustrate the Measurement Report, Table 1 may be used as an example. Specifically, Table 1 shows values of the RSRP of the neighbor cells 103 in dBs, with different physical cell IDs. In one example, the UE 105 may send the Measurement Report in intervals of 60 milliseconds (ms). In another example, the UE 105 may send the Measurement Report at an interval of 30 milliseconds (ms).

*Table1: RSRP values*

| Neighbor Cell ID | Barred/ Not Barred | CellReservedFor OperatorUse/ NotReserved | Measurement Report comprising RSRP values | | |
| --- | --- | --- | --- | --- | --- |
| | | | Measurement Report 1 | Measurement Report 2 | Measurement Report 3 |
| Cell ID 1 | Not Barred | Not Reserved | -87 | -90 | -85 |
| Cell ID 2 | Not Barred | Not Reserved | -89 | -87 | -86 |
| Cell ID 3 | Barred | Not Reserved | -88 | -87 | -85 |
| Cell ID 4 | Not Barred | Not Reserved | -95 | -93 | -91 |
| Cell ID 5 | Not Barred | CellReservedFor OperatorUse | -90 | -88 | -87 |
| Cell ID 6 | Not Barred | Not Reserved | -97 | -95 | -94 |

**Table 1**

As may be noted from the Table 1, the UE 105 may send the RSRP values of the neighbor cells 103. For example, consider the neighbor cell ID 1. The neighbor cell ID 1 has the conditions that the cell is not barred and the cell is not reserved for operator use. Further, the UE 105 may send the Measurement Report comprising the RSRP values at a report -interval e.g., 60 ms. For example, the UE 105 may send the Measurement Report 1 at an interval of 0ms. The UE 105 may send the Measurement Report 2 at 0th ms. Further, the UE 105 may send the Measurement Report 3 at 120ms. Similarly, the UE 105 may send the Measurement Reports for the neighbor cell ID 2. Although the example for the Measurement Report is shown for the intervals of 60ms, it should be understood that the the report-intervals to send the Measurement Report is configurable, and can be configured as per requirements and/or deployments.

Generally, after receiving the Measurement Reports, the serving eNodeB 102 may send the handover request to the neighbor cell 103 having the highest RSRP values. In one example, a neighbor cell 103 may have a highest RSRP value at the first instance e.g., 60ms. However, the neighbor cell 103 may not have the highest RSRP values throughout the time. Using existing techniques, the serving eNodeB 102 may send the handover request to the neighbor cell 103 having the highest RSRP values. If the neighbor cell 103 RSRP values decreases suddenly after the handover due to power fluctuations and network failure, existing call or data session may get disconnected. Therefore, the neighbor cell 103 having the RSRP values may not be reliable to handover. In another example, a neighbor cell 103 having less RSRP values have a better signal strength but may not be selected due to restrictions/considerations in the selection of the target cell/eNodeB.

To select the target cell/eNodeB 106a that is reliable, a history of the multiple Measurement Reports received from the UE at different intervals may be considered. For instance, the Measurement Reports of three or four intervals may be considered to determine the reliability of a neighbor cell 103. In order to determine the reliability, a weightage may be assigned to the RSRP values of the multiple MRs. In other words, after sending the Measurement Reports to the serving eNodeB 102, the controller 110 may assign the weightage to the RSRP values received in the multiple Measurement Reports. In one example, the weightage may be binary (i.e., having values only of zero and one), or alternatively the weightage may have values ranging from 0 to 1. In one implementation, the weightage may be assigned in an incremental manner. In order to explain assigning the weightage, Table 1 may be used as an example. Consider the Measurement Reports for the neighbor cell ID 1 and neighbor cell ID 2. For the Measurement Reports comprising the RSRP values, the weightage may be assigned in the increments of 0.1. The assignment of the weightage may be illustrated in Table 2. Specifically, Table 2 shows the weightage assigned to the RSRP values.

*Table 2: Weightage assigned to the RSPR values*

| Neighbor Cell ID | Measurement Report comprising RSRP values | | |
| --- | --- | --- | --- |
| | Measurement Report 1 (Weightage) | Neighbor Cell ID | Measurement Report 1 (Weightage) |
| Cell ID 1 | -87 | Cell ID 1 | -87(0.1) |
| Cell ID 2 | -89 | Cell ID 2 | -89(0.1) |
| Cell ID 3 | -88 | Cell ID 3 | -88(0.1) |
| Cell ID 4 | -95 | Cell ID 4 | -95(0.1) |
| Cell ID 5 | -90 | Cell ID 5 | -90(0.1) |
| Cell ID 6 | -97 | Cell ID 6 | -97(0.1) |

**Table 2**

As may be noted further from Table 3 below, the weightage/weights are assigned in the incremental manner. Said weightages/ incremental weightages may be incremented for assignment to the RSRP values of the multiple MRs based on intervals of receiving of the each MR from the UE. For example, for the neighbor cell ID 1, for the Measurement Report 1, a weightage of 0.1 is assigned. Similarly, for the neighbor cell ID 1, for the Measurement Report 2 and 3, a weightage of 0.2 and 0.3 are assigned respectively. After assigning the weightage to the RSRP values, a weighted average of the RSRP for each neighbor cell may be calculated by the controller 110. In one implementation, the weighted average may be calculated based on the values associated with the RSRP and the weightage assigned. The weighted average may be calculated using an equation-

$$(RSRP_n) = \left(\sum_{i=0}^{k} w_i MR_i\right) / \sum_{i=0}^{k} w_i$$

The $w_i$ indicates weightage incremented by 0.1, k indicates number of Measurement Reports incremented by 1, and $MR_i$ indicates the RSRP values received for a neighbor cell 103.

For example, the weighted average for the neighbor cell ID 1 may be calculated as

$(RSRP_1) = ((MR_1*w_1) + (MR_2*w_2) + (MR_3*w_3)) / (w_1 + w_2 + w_3)$. Specifically, the weighted average for the neighbor cell ID 1 may be calculated as $(RSRP_1) = ((-87)* (0.1) + (-90)*(0.2) + (-85)*(0.3))/ ((0.1) + (0.2) + (0.3))$. Similarly, the weighted average may be calculated for the neighbor cell ID 2, 3 and so on. In order to illustrate the calculation of the weighted average, Table 3 may be used as an example. Specifically, Table 3 illustrates the calculated weighted average of the neighbor cells shown in Table 1.

*Table 3: Calculation of weighted average of the neighbor cells*

| Neighbor Cell ID | Measurement Report comprising RSRP values | | | Weighted average |
| --- | --- | --- | --- | --- |
| | Measurement Report 1 (weightage) | Measurement Report 2 (Weightage) | Measurement Report 3 (Weightage) | |
| Cell ID 1 | -87(0.1) | -90(0.2) | -85(0.3) | -87.0000 |
| Cell ID 2 | -89(0.1) | -87(0.2) | -86(0.3) | -86.8333 |
| Cell ID 3 | -88(0.1) | -87(0.2) | -85(0.3) | -86.1667 |
| Cell ID 4 | -95(0.1) | -93(0.2) | -91(0.3) | -92.3333 |
| Cell ID 5 | -90(0.1) | -88(0.2) | -87(0.3) | -87.8333 |
| Cell ID 6 | -97(0.1) | -95(0.2) | -94(0.3) | -94.8333 |

**Table 3**

After calculating the weighted average, the service eNodeB 102 may create a list of neighbor cells such as 106a, 106b and so on having the highest weighted average RSRP values arranged in a descending order. For example, the serving eNodeB 102 may create the list as shown in Table 4. Specifically, the Table 4 shows weighted average for the neighbor cell IDs 1 and 2.

*Table 4: List of neighbor cells with highest RSRP values*

| Neighbor Cell ID | Weighted average RSRP |
| --- | --- |
| Cell ID 2 | -86.8333 |
| Cell ID 1 | -87.0000 |

**Table 4**

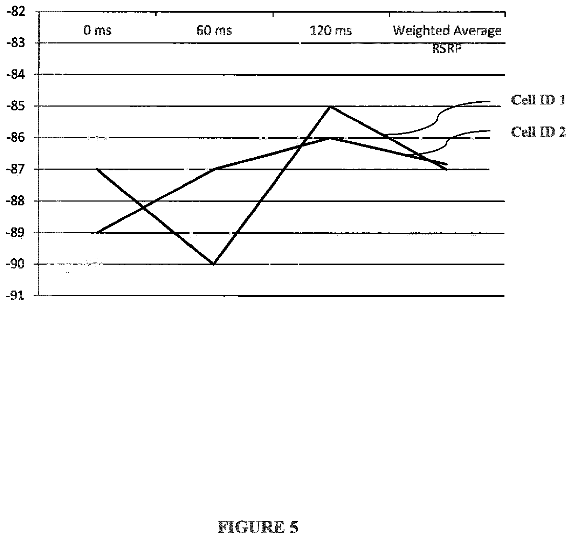

From the list, the service eNodeB 102 may select the neighbor cell 106a having the highest weighted average of RSRP values (preferred next candidate cell). In one example, FIG. 5 may be used to illustrate the selection of the neighbor cell 106a. Specifically, FIG. 5 shows simulation results of the weighted average calculated for the neighbor cell ID 1 and the neighbor cell ID 2 for the Measurement Reports illustrated in Table 1, Table 2, Table 3 and Table 4. As may be seen from FIG. 5, the neighbor cell 2 comprises the highest RSRP value as compared to the neighbor cell ID 1. Therefore, the serving eNodeB 102 may make a decision to send the handover request to the neighbor cell ID 2. After sending the handover request to the neighbor cell ID 2, if the neighbor cell ID 2 sends an acknowledgement indicating failure, the serving eNodeB 102 may send the handover request to the neighbor cell ID 1 as the neighbor cell ID 1 is the next preferred candidate cell in the list calculated comprising the weighted average of the RSRP values. This selection of next preferred candidate cell therefore saves time by preventing algorithm re-execution. In an embodiment, if however, the neighbor cell ID 1 sends an acknowledgement indicating failure, the serving eNodeB 102 may re-run the algorithm to get a list of preferred candidate cells and the next preferred candidate cells. After obtaining the list, the serving eNodeB 102 may send the handover request to the neighbor cell having highest weighted average RSRP values from amongst the next preferred candidate target cells.

In one implementation, the serving eNodeB 102 may calculate the weighted average within a periodic interval time. The periodic interval time may be calculated based on mobility of the UE 105. The periodic interval time may be higher for low mobility UEs and lower for high mobility UEs. The periodic interval time may be calculated based on report interval of the Measurement Report and speed of the UE 105 based on Time-to-Trigger (TTT) scaling factor. A value corresponding to the Time-to-Trigger scaling factor may be determined based on the speed of the UE 105.

$$PeriodicInterval_{TTT} = Report\ Interval * Time\ to\ trigger\ Scaling\ Factor$$

Further, the periodic interval time for Hysteresis may be calculated. The periodic interval time may be calculated based on handover margin (HOM) or the Hysteresis and scaling factor of the Hystersis.

$$PeriodicInterval_{Hys} = Hysteresis\ HOM + Hysteresis\ Scaling\ Factor$$

The Hysteresis or the handover margin (HOM) may be a constant variable representing a threshold of difference in received signal strength i.e., RSRP between the serving eNodeB 102 and the neighbor cells/eNodeB 106a. The HOM may ensure that the target eNodeB 106a is the most appropriate cell that the UE 105 may rely on during the handover. The TTT may indicate a time interval required to satisfy the HOM condition.

After computing the weighted average of the RSRP values, the serving eNodeB 102 may modify the periodic interval time. After modifying the periodic interval time, the serving eNodeB 102 may check for one or more conditions to initiate a timer before making the handover decision. In one example, the serving eNodeB 102 may check the HOM, RSRP values and the periodic interval time for the conditions below.

$$RSRP_S + PeriodicInterval_{Hys} < RSRP_{Sthreshold}$$

$$RSRP_n - PeriodicInterval_{Hys} > RSRP_{n\ threshold}$$

$$RSRP_n - RSRP_S > PeriodicInterval_{Hysteresis}$$

After checking the one or more conditions, the serving eNodeB 102 may calculate the periodic interval time for TTT as described above. After expiry of the periodic interval time, the serving eNodeB 102 may take the handover decision to send the handover request to the target eNodeB 102. As the handover decision is based on the periodic interval time, the handover decision is taken quickly for high mobility UEs. By taking the handover decision in less time, Radio Link failures may be avoided. Further, for low mobility UEs, due to periodic interval time, unnecessary handovers may be avoided. In one implementation, the serving eNodeB 102 may make the decision based on the Measurement Report and may issue the handover request to the target eNodeB 106a by sending necessary information to prepare the handover at the target eNodeB 106a.

As discussed above, the handover request may be sent to the neighbor cell 106a that comprises the highest weighted average. In one example, the serving eNodeB 102 may send the handover request to the neighbor cell ID 2. After sending the handover request, the target eNodeB 106a may prepare the handover. Based on the handover request, the target eNodeB 106a may send a status indicating handover request acknowledgement to the serving eNodeB 106a. In one implementation, the target eNodeB 106a may send the acknowledgement after receiving an admission control message. The target eNodeB 106a may accept the handover based on the bandwidth available. If the target eNodeB 106a accepts the handover request, the serving eNodeB 102 may handover to the target eNodeB 106a selected.

If the target eNodeB 106a sends the status indicating failure of the handover request acknowledgement, the serving eNodeB 102 may select the neighbor cell 106b having second highest RSRP (next preferred candidate cell) based on the weighted average and may send the handover request. For example, consider the example shown in FIG.5, at first, the serving eNodeB 102 may send the handover request to the neighbor cell ID 2 as the neighbor cell ID 2 has the highest weighted average of RSRP. If the neighbor cell ID 2 sends the handover request acknowledgement indicating a failure, the serving eNodeB 102 may send the handover request to the neighbor cell ID 1. By selecting the neighbor cell 106b having the second highest RSRP (next preferred candidate cell) weighted average, the serving eNodeB 102 prevents re-run of the algorithm to re-calculate the weighted average of the RSRP values of the neighbor cells to send the handover request.

After receiving the handover request acknowledgement, the serving eNodeB 102 may send a handover command message to the UE 105 as a RRC Connection Reconfiguration message to perform the handover. Upon sending the RRC message, the serving eNodeB 102 may request the UE 105 to perform the handover. Subsequently, the serving eNodeB 102 may send a SN status transfer message to the target eNodeB 106a to convey uplink and downlink status. Meanwhile the UE 105 can do synchronization with the target eNodeB 106a. Further, the target eNodeB 106a may respond with a UL allocation and timing advance. Subsequently, the UE 105 may send a confirmation message to target eNodeB 106a indicating the completion of the handover execution phase for the UE 105.

The techniques described above may be used for various wireless communication networks, such as Code Division Multiple Access (CDMA) networks, Time Division Multiple Access (TDMA) networks, Frequency Division Multiple Access (FDMA) networks, Orthogonal FDMA (OFDMA) networks, Single-Carrier FDMA (SC-FDMA) networks, etc. The terms "networks" and "systems" are often used interchangeably. A CDMA network may implement a radio technology such as Universal Terrestrial Radio Access (UTRA), CDMA2000, etc. UTRA includes Wideband-CDMA (W-CDMA) and Low Chip Rate (LCR). CDMA2000 covers IS-2000, IS-95 and IS-856 standards.

A TDMA network may implement a radio technology such as Global System for Mobile Communications (GSM). An OFDMA network may implement a radio technology such as Evolved UTRA (E-UTRA), IEEE 802.11, IEEE 802.16, IEEE 802.20, Flash-OFDM®, etc. UTRA, E-UTRA, and GSM are part of Universal Mobile Telecommunication System (UMTS).

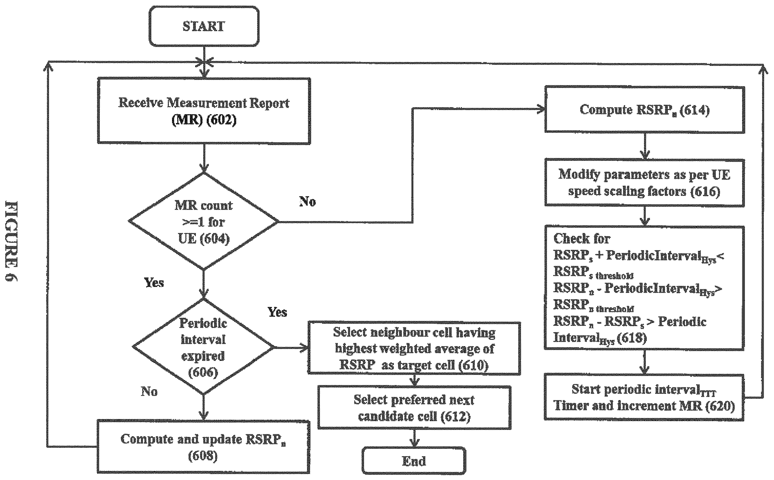

Referring now to FIG. 6 which shows a flowchart 600 illustrating a method for selecting a target cell during a handover procedure at the serving cell/eNodeB 102, in accordance with an embodiment of the present subject matter. The method 600 may be described in the general context of computer executable instructions. Generally, computer executable instructions can include routines, programs, objects, components, data structures, procedures, modules, functions, etc., that perform particular functions or implement particular abstract data types. The method 600 may also be practiced in a distributed computing environment where functions are performed by remote processing devices that are linked through a communications network. In a distributed computing environment, computer executable instructions may be located in both local and remote computer storage media, including memory storage devices.

The order in which the method 600, as illustrated in FIG.6, is described is not intended to be construed as a limitation, and any number of the described method blocks can be combined in any order to implement the method 600 or alternate methods. Additionally, individual blocks may be deleted from the method 600 without departing from the spirit and scope of the subject matter described herein. Furthermore, the method can be implemented in any suitable hardware, software, firmware, or combination thereof. However, for ease of explanation, in the embodiments described below, the method 600 may be considered to be implemented on the above described serving cell/eNodeB 102.

At first, a plurality of neighbor cells 103 may be detected. A neighbor cell 103 may indicates a target cell receiving a handover request from a serving eNodeB. At step/block 602, a Measurement Report from the user equipment (UE) may be received. After receiving the Measurement Report, a count of Measurement Report exceeding 1 may be checked as shown at step 604. If the Measurement Report count is more than 1, expiry of a periodic interval time of Time to trigger (TTT) may be checked, at step/block 606. If the periodic interval time is not expired, a weighted average of the RSRP for neighbor cells may be calculated and subsequently the weighted average of the RSRP values are updated, at step 608 using the explanation provided above.

At step 606, if the periodic interval time is expired, a neighbor cell having the highest weighted average of RSRP may be selected as a target cell as shown at step/block 610. The weighted average of RSRP may be calculated based on the Measurement Report received from the UE 105. After calculating the weighted average of RSRP of the neighbor cells, a handover request may be sent. If the neighbor acknowledges processing the handover request, the handover is processed to the neighbor cell as the target cell. If the neighbor cell having highest weighted average of RSRP sends an acknowledgement indicating failure, the handover request may be to the neighbor cell having second highest weighted average of RSRP values at step/block 612. The selection of the neighbor cell having the second highest weighted average of RSRP values upon failure acknowledgement from the neighbor cell having highest weighted average of RSRP values may be termed as a preferred next candidate cell. After selecting the neighbor cell having second highest weighted average of RSRP values, the handover request may be sent to the neighbor cell.

If the count of Measurement Report is less than 1 at step 604, the weighted average of the RSRP values for the neighbor cell may be calculated at step/block 614 using the explanation provided above. After calculating the weighted average of the RSRP values, one or more parameters such as $PeriodicInterval_{TTT}$ and $PeriodicInterval_{Hys}$ may be modified based on scaling factors of the UE at step/block 616. The $PeriodicInterval_{TTT}$ and the $PeriodicInterval_{Hys}$ may be modified using

$$PeriodicInterval_{TTT} = Report\ Interval * Time\ to\ trigger\ Scaling\ Factor$$

$$\text{PeriodicInterval}_{Hys} = \text{Hysteresis (HOM)} + \text{Hysteresis Scaling Factor.}$$

After modifying the periodic interval time, the serving eNodeB may check for one or more conditions to initiate the handover decision at step/block 618. The serving eNodeB may check for conditions:

$$\text{RSRP}_S + \text{PeriodicInterval}_{Hys} < \text{RSRP}_{S\ threshold}$$

$$\text{RSRP}_n - \text{PeriodicInterval}_{Hys} > \text{RSRP}_{n\ threshold}$$

$$\text{RSRP}_n - \text{RSRP}_S > \text{PeriodicInterval}_{Hysteresis}$$

After checking for the one or more conditions, the serving eNodeB may initiate the periodic interval time and may increment the count of the Measurement Report at step/block 620.

**Claims**

1.  A method for selecting a target cell during a handover procedure at a serving cell (102), the method at the serving cell (102) comprising:

    detecting a plurality of neighbor cells (106a, 106b) of the serving cell (102), wherein the plurality of neighbor cells (106a, 106b) indicates a plurality of candidate cells for receiving a handover request from a serving eNodeB for a User Equipment UE (105); receiving from the user equipment UE (105) at periodic intervals of time, a plurality of Measurement Reports, MR, comprising Reference Signal Received Power RSRP values of the plurality of neighbor cells (106a, 106b); assigning an incremental weightage to the RSRP values based on the periodic intervals of time, wherein the incremental weightage is assigned to each RSRP value received at each periodic interval of time for the plurality of neighboring cells (106a, 106b), and wherein the incremental weightage is incremented by a predefined value at each periodic interval of time while assigning to the RSRP values received at each periodic interval of time;
    calculating a weighted average of the RSRP values for each neighbor cell of the plurality of neighbor cells (106a, 106b), wherein the weighted average is calculated based on the RSRP values and the incremental weightages assigned to the RSRP values; and
    selecting a target cell from the plurality of neighbor cells (106a, 106b) based on the weighted average to send a handover request from the serving cell (102) to the target cell, wherein a neighbor cell from the plurality of neighbor cells (106a, 106b) having a highest weighted average of the RSRP values is selected as the target cell.

2.  The method according to claim 1, wherein the Reference Signal Received Power RSRP values of the plurality of neighbor cells (106a, 106b) are received in a Measurement Report received within a periodic interval of time.

3.  The method according to claim 2, wherein the periodic interval of time is based on report interval of the Measurement Report, Time to Trigger TTT and mobility of the User Equipment UE (105).

4.  The method according to claim 2, wherein the handover request is sent after expiry of the periodic interval of time.

5.  The method according to claim 1, further comprising arranging the weighted averages of the RSRP values of the MR in a descending order to select the target cell.

6.  The method according to claim 1, further comprising receiving a status of the handover request from the target cell with the highest weighted average of the RSRP values.

7.  The method according to claim 6, further comprising selecting a neighbor cell with subsequent highest weighted average of the RSRP values as a preferred next candidate cell to send the handover request, wherein the neighbor cell with subsequent highest weighted average RSRP is selected when the neighbor cell with highest weighted average RSRP indicates failure of the handover request.

8. The method according to claim 1, wherein the weighted average is calculated using an equation

$$RSRP_n = \frac{\sum_{i=0}^{k} w_i MR_i}{\sum_{i=0}^{k} w_i}$$ wherein $w_i$ indicates incremental weightage, $MR_i$ indicates RSRP values received for the plurality of neighbor cells, k indicates the periodic intervals of time of receiving the RSRP values and $RSRP_n$ is the weighted average of the RSRP values.

9. A system for selecting a target cell during a handover procedure at a serving cell (102), the system comprising:

a controller (110); and
a memory (114) coupled to the controller (110), wherein the controller (110) is capable of executing program instructions stored in the memory (114), to:

detect a plurality of neighbor cells (106a, 106b) of the serving cell (102), wherein the plurality of neighbor cells (106a, 106b) indicates a plurality of candidate cells for receiving a handover request from a serving eNodeB for a User Equipment UE (105), receive from the user equipment UE (105) at periodic intervals of time, a plurality of Measurement Reports, MR, comprising Reference Signal Received Power RSRP values of the plurality of neighbor cells (106a, 106b); assign an incremental weightage to the RSRP values based on the periodic intervals of time, wherein the incremental weightage is assigned to each RSRP value received at each periodic interval of time for the plurality of neighbor cells (106a, 106b), and wherein the incremental weightage is incremented by a predefined value at each periodic interval of time while assigning to the RSRP values received at each periodic interval of time,
calculate a weighted average of the RSRP values for each neighbor cell of the plurality of neighbor cells (106a, 106b), wherein the weighted average is calculated based the RSRP values and the incremental weightages assigned to the RSRP values, and
select a target cell from the plurality of neighbor cells (106a, 106b) based on the weighted average to send a handover request from the serving cell (102) to the target cell, wherein a neighbor cell from the plurality of neighbor cells (106a, 106b) having a highest weighted average of the RSRP values is selected as the target cell.

10. The system according to claim 9, wherein the Reference Signal Received Power RSRP values of the plurality of neighbor cells (106a, 106b) are received in a Measurement Report received within a periodic interval of time.

11. The system according to claim 10, wherein the periodic interval of time is based on report interval of the Measurement Report, Time to Trigger TTT and mobility of the User Equipment UE (105).

12. The system according to claim 11, wherein the handover request is sent after expiry of the periodic interval time.

13. The system according to claim 9, wherein the weighted average is calculated using an equation

$$RSRP_n = \frac{\sum_{i=0}^{k} w_i MR_i}{\sum_{i=0}^{k} w_i},$$ wherein $w_i$ indicates incremental weightage, $MR_i$ indicates RSRP values received for the plurality of neighbor cells, k indicates the periodic intervals of time of receiving the RSRP values and $RSRP_n$ is the weighted average of the RSRP values.

14. The system according to 9, wherein the User Equipment UE (105) receives a status of the handover request from the target cell with the highest weighted average of the RSRP values.

15. The system according to claim 14, wherein the controller further executes the program instructions to select a neighbor cell with subsequent highest weighted average RSRP as a preferred next candidate cell to send the handover request, wherein the neighbor cell with subsequent highest weighted average RSRP is selected when the neighbor cell with highest weighted average RSRP indicates failure of the handover request.

**Patentansprüche**

1. Verfahren zum Auswählen einer Zielzelle während einer Übergabeprozedur an einer Versorgungszelle (102), wobei das Verfahren an der Versorgungszelle (102) Folgendes umfasst:

   Detektieren von mehreren Nachbarzellen (106a, 106b) der Versorgungszelle (102), wobei die mehreren Nachbarzellen (106a, 106b) mehrere Kandidatenzellen zum Empfangen einer Übergabeanfrage von einem Versorgungs-eNodeB für ein Benutzergerät UE (105) angeben;
   Empfangen von mehreren Messberichten MR, die Werte der Referenzsignalempfangsleistung RSRP der mehreren Nachbarzellen (106a, 106b) umfassen, vom Benutzergerät UE (105) zu periodischen Zeitintervallen;
   Zuweisen einer inkrementellen Gewichtung zu den RSRP-Werten basierend auf den periodischen Zeitintervallen, wobei die inkrementelle Gewichtung jedem RSRP-Wert zugewiesen wird, der zu jedem periodischen Zeitintervall für die mehreren Nachbarzellen (106a, 106b) empfangen wird, und wobei die inkrementelle Gewichtung zu jedem periodischen Zeitintervall um einen vordefinierten Wert inkrementiert wird, während die RSRP-Werte, die zu jedem periodischen Zeitintervall empfangen werden, zugewiesen werden;
   Berechnen eines gewichteten Durchschnitts der RSRP-Werte für jede Nachbarzelle der mehreren Nachbarzellen (106a, 106b), wobei der gewichtete Durchschnitt auf Basis der RSRP-Werte und der den RSRP-Werten zugewiesenen inkrementellen Gewichtungen berechnet wird; und
   Auswählen einer Zielzelle aus den mehreren Nachbarzellen (106a, 106b) auf Basis des gewichteten Durchschnitts, damit eine Übergabeanfrage von der Versorgungszelle (102) zur Zielzelle gesendet wird, wobei eine Nachbarzelle aus den mehreren Nachbarzellen (106a, 106b), die einen höchsten gewichteten Durchschnitt der RSRP-Werte aufweist, als die Zielzelle ausgewählt wird.

2. Verfahren nach Anspruch 1, wobei die Referenzsignalempfangsleistungswerte bzw. RSRP-Werte der mehreren Nachbarzellen (106a, 106b) in einem Messbericht empfangen werden, der innerhalb eines periodischen Zeitintervalls empfangen wird.

3. Verfahren nach Anspruch 2, wobei das periodische Zeitintervall auf einem Berichtsintervall des Messberichts, einer Zeit zum Auslösen TTT und einer Mobilität des Benutzergeräts UE (105) basiert.

4. Verfahren nach Anspruch 2, wobei die Übergabeanfrage nach dem Ablauf des periodischen Zeitintervalls gesendet wird.

5. Verfahren nach Anspruch 1, das ferner Anordnen der gewichteten Durchschnitte der RSRP-Werte des MR in einer absteigenden Reihenfolge zum Auswählen der Zielzelle umfasst.

6. Verfahren nach Anspruch 1, das ferner Empfangen eines Status der Übergabeanfrage von der Zielzelle mit dem höchsten gewichteten Durchschnitt der RSRP-Werte umfasst.

7. Verfahren nach Anspruch 6, das ferner Auswählen einer Nachbarzelle mit einem nachfolgend höchsten gewichteten Durchschnitt der RSRP-Werte als eine bevorzugte nächste Kandidatenzelle zum Senden der Übergabeanfrage umfasst, wobei die Nachbarzelle mit dem nachfolgend höchsten gewichteten Durchschnitts-RSRP ausgewählt wird, wenn die Nachbarzelle mit dem höchsten gewichteten Durchschnitts-RSRP ein Scheitern der Übergabeanfrage angibt.

8. Verfahren nach Anspruch 1, wobei der gewichtete Durchschnitt unter Verwendung einer Gleichung

$$RSRP_n = \frac{\sum_{i=0}^{k} w_i MR_i}{\sum_{i=0}^{k} w_i}$$ berechnet wird, wobei $w_i$ die inkrementelle Gewichtung angibt, $MR_i$ RSRP-Werte, die

für die mehreren Nachbarzellen empfangen werden, angibt, $k$ die periodischen Zeitintervalle des Empfangs der RSRP-Werte angibt und $RSRP_n$ der gewichtete Durchschnitt der RSRP-Werte ist.

9. System zum Auswählen einer Zielzelle während einer Übergabeprozedur an einer Versorgungszelle (102), wobei das System Folgendes umfasst:

   eine Steuerung (110) und

einen Speicher (114), der mit der Steuerung (110) gekoppelt ist, wobei die Steuerung (110) in der Lage ist, im Speicher (114) gespeicherte Programmanweisungen für Folgendes auszuführen:

Detektieren von mehreren Nachbarzellen (106a, 106b) der Versorgungszelle (102), wobei die mehreren Nachbarzellen (106a, 106b) mehrere Kandidatenzellen zum Empfangen einer Übergabeanfrage von einem Versorgungs-eNodeB für ein Benutzergerät UE (105) angeben,

Empfangen von mehreren Messberichten MR, die Werte der Referenzsignalempfangsleistung RSRP der mehreren Nachbarzellen (106a, 106b) umfassen, vom Benutzergerät UE (105) zu periodischen Zeitintervallen;

Zuweisen einer inkrementellen Gewichtung zu den RSRP-Werten basierend auf den periodischen Zeitintervallen, wobei die inkrementelle Gewichtung jedem RSRP-Wert zugewiesen wird, der zu jedem periodischen Zeitintervall für die mehreren Nachbarzellen (106a, 106b) empfangen wird, und wobei die inkrementelle Gewichtung zu jedem periodischen Zeitintervall um einen vordefinierten Wert inkrementiert wird, während die RSRP-Werte, die zu jedem periodischen Zeitintervall empfangen werden, zugewiesen werden;

Berechnen eines gewichteten Durchschnitts der RSRP-Werte für jede Nachbarzelle der mehreren Nachbarzellen (106a, 106b), wobei der gewichtete Durchschnitt auf Basis der RSRP-Werte und der den RSRP-Werten zugewiesenen inkrementellen Gewichtungen berechnet wird; und

Auswählen einer Zielzelle aus den mehreren Nachbarzellen (106a, 106b) auf Basis des gewichteten Durchschnitts, damit eine Übergabeanfrage von der Versorgungszelle (102) zur Zielzelle gesendet wird, wobei eine Nachbarzelle aus den mehreren Nachbarzellen (106a, 106b), die einen höchsten gewichteten Durchschnitt der RSRP-Werte aufweist, als die Zielzelle ausgewählt wird.

10. System nach Anspruch 9, wobei die Referenzsignalempfangsleistungswerte bzw. RSRP-Werte der mehreren Nachbarzellen (106a, 106b) in einem Messbericht empfangen werden, der innerhalb eines periodischen Zeitintervalls empfangen wird.

11. System nach Anspruch 10, wobei das periodische Zeitintervall auf einem Berichtsintervall des Messberichts, einer Zeit zum Auslösen TTT und einer Mobilität des Benutzergeräts UE (105) basiert.

12. System nach Anspruch 11, wobei die Übergabeanfrage nach dem Ablauf des periodischen Zeitintervalls gesendet wird.

13. System nach Anspruch 9, wobei der gewichtete Durchschnitt unter Verwendung einer Gleichung $RSRP_n = \dfrac{\sum_{i=0}^{k} w_i MR_i}{\sum_{i=0}^{k} w_i}$ berechnet wird, wobei $w_i$ die inkrementelle Gewichtung angibt, $MR_i$ RSRP-Werte, die für die mehreren Nachbarzellen empfangen werden, angibt, $k$ die periodischen Zeitintervalle des Empfangs der RSRP-Werte angibt und $RSRP_n$ der gewichtete Durchschnitt der RSRP-Werte ist.

14. System nach Anspruch 9, wobei das Benutzergerät UE (105) einen Status der Übergabeanfrage von der Zielzelle mit dem höchsten gewichteten Durchschnitt der RSRP-Werte empfängt.

15. System nach Anspruch 14, wobei die Steuerung ferner die Programmanweisungen ausführt, um eine Nachbarzelle mit einem nachfolgend höchsten gewichteten Durchschnitts-RSRP als eine bevorzugte nächste Kandidatenzelle zum Senden der Übergabeanfrage auszuwählen, wobei die Nachbarzelle mit dem nachfolgend höchsten gewichteten Durchschnitts-RSRP ausgewählt wird, wenn die Nachbarzelle mit dem höchsten gewichteten Durchschnitts-RSRP ein Scheitern der Übergabeanfrage angibt.

**Revendications**

1. Procédé destiné à sélectionner une cellule cible pendant une procédure de transfert intercellulaire au niveau d'une cellule de desserte (102), le procédé consistant, au niveau de la cellule de desserte (102), à :

détecter une pluralité de cellules voisines (106a, 106b) de la cellule de desserte (102), dans lequel la pluralité de cellules voisines (106a, 106b) indique une pluralité de cellules candidates pour recevoir une demande de transfert intercellulaire en provenance d'un noeud eNodeB de desserte pour un Equipement Utilisateur UE (User Equipment) (105) ;

recevoir en provenance de l'Equipement Utilisateur UE (105), à des intervalles de temps périodiques, une pluralité de Rapports de Mesure, MR (Measurement Reports), comprenant des valeurs de Puissance Reçue de Signal de référence RSRP (Reference SIgnal Received Power) de la pluralité de cellules voisines (106a, 106b) ;

affecter une pondération incrémentielle aux valeurs RSRP sur la base des intervalles de temps périodiques, dans lequel la pondération incrémentielle est affectée à chaque valeur RSRP reçue à chaque intervalle de temps périodique pour la pluralité de cellules voisines (106a, 106b), et dans lequel la pondération incrémentielle est incrémentée d'une valeur prédéfinie à chaque intervalle de temps périodique pendant l'affectation aux valeurs RSRP reçues à chaque intervalle de temps périodique ;

calculer une moyenne pondérée des valeurs RSRP pour chaque cellule voisine de la pluralité de cellules voisines (106a, 106b), dans lequel la moyenne pondérée est calculée sur la base des valeurs RSRP et des pondérations incrémentielles affectées aux valeurs RSRP ; et

sélectionner une cellule cible parmi la pluralité de cellules voisines (106a, 106b) sur la base de la moyenne pondérée pour envoyer une demande de transfert intercellulaire de la cellule de desserte (102) à la cellule cible, dans lequel une cellule voisine parmi la pluralité de cellules voisines (106a, 106b) ayant une moyenne pondérée la plus élevée des valeurs RSRP est sélectionnée en tant que cellule cible.

2. Procédé selon la revendication 1, dans lequel les valeurs de Puissance Reçue de Signal de Référence RSRP de la pluralité de cellules voisines (106a, 106b) sont reçues dans un Rapport de Mesure reçu au cours d'un intervalle de temps périodique.

3. Procédé selon la revendication 2, dans lequel l'intervalle de temps périodique est basé sur l'intervalle de rapport du Rapport de Mesure, le Temps jusqu'à Déclenchement TTT (Time to Trigger) et la mobilité de l'Equipement Utilisateur UE (105).

4. Procédé selon la revendication 2, dans lequel la demande de transfert intercellulaire est envoyée après expiration de l'intervalle de temps périodique.

5. Procédé selon la revendication 1, consistant en outre à agencer les moyennes pondérées des valeurs RSRP du MR en ordre décroissant pour sélectionner la cellule cible.

6. Procédé selon la revendication 1, consistant en outre à recevoir un état de la demande de transfert intercellulaire en provenance de la cellule cible ayant la moyenne pondérée la plus élevée des valeurs RSRP.

7. Procédé selon la revendication 6, consistant en outre à sélectionner une cellule voisine ayant la moyenne pondérée la plus élevée suivante des valeurs RSRP en tant que cellule candidate suivante préférée pour envoyer la demande de transfert intercellulaire, dans lequel la cellule voisine ayant la moyenne pondérée la plus élevée suivante RSRP est sélectionnée lorsque la cellule voisine ayant la moyenne pondérée la plus élevée RSRP indique l'échec de la demande de transfert intercellulaire.

8. Procédé selon la revendication 1, dans lequel la moyenne pondérée est calculée à l'aide d'une équation

$$RSRP_n = \frac{\sum_{i=0}^{k} w_i MR_i}{\sum_{i=0}^{k} w_i},$$ où $w_i$ indique une pondération incrémentielle, $MR_i$ indique des valeurs RSRP reçues pour la pluralité de cellules voisines, $k$ indique les intervalles de temps périodiques de la réception des valeurs RSRP et $RSRP_n$ est la moyenne pondérée des valeurs RSRP.

9. Système destiné à sélectionner une cellule cible pendant une procédure de transfert intercellulaire au niveau d'une cellule de desserte (102), le système comprenant :

une unité de commande (110) ; et
une mémoire (114) couplée à l'unité de commande (110),
dans lequel l'unité de commande (110) est capable d'exécuter des instructions de programmes stockées dans la mémoire (114), pour :

détecter une pluralité de cellules voisines (106a, 106b) de la cellule de desserte (102), dans lequel la pluralité de cellules voisines (106a, 106b) indique une pluralité de cellules candidates pour recevoir une demande de transfert intercellulaire en provenance d'un noeud eNodeB de desserte pour un Equipement Utilisateur UE (105),

recevoir en provenance de l'Equipement Utilisateur UE (105), à des intervalles de temps périodiques, une pluralité de Rapports de Mesure, MR, comprenant des valeurs de Puissance Reçue de Signal de Référence RSRP de la pluralité de cellules voisines (106a, 106b) ;

affecter une pondération incrémentielle aux valeurs RSRP sur la base des intervalles de temps périodiques, dans lequel la pondération incrémentielle est affectée à chaque valeur RSRP reçue à chaque intervalle de temps périodique pour la pluralité de cellules voisines (106a, 106b), et dans lequel la pondération incrémentielle est incrémentée d'une valeur prédéfinie à chaque intervalle de temps périodique pendant l'affectation aux valeurs RSRP reçues à chaque intervalle de temps périodique,

calculer une moyenne pondérée des valeurs RSRP pour chaque cellule voisine de la pluralité de cellules voisines (106a, 106b), dans lequel la moyenne pondérée est calculée sur la base des valeurs RSRP et des pondérations incrémentielles affectées aux valeurs RSRP, et

sélectionner une cellule cible parmi la pluralité de cellules voisines (106a, 106b) sur la base de la moyenne pondérée pour envoyer une demande de transfert intercellulaire de la cellule de desserte (102) à la cellule cible, dans lequel une cellule voisine parmi la pluralité de cellules voisines (106a, 106b) ayant une moyenne pondérée la plus élevée des valeurs RSRP est sélectionnée en tant que cellule cible.

10. Système selon la revendication 9, dans lequel les valeurs de Puissance Reçue de Signal de référence RSRP de la pluralité de cellules voisines (106a, 106b) sont reçues dans un Rapport de Mesure reçu au cours d'un intervalle de temps périodique.

11. Système selon la revendication 10, dans lequel l'intervalle de temps périodique est basé sur l'intervalle de rapport du Rapport de Mesure, le Temps jusqu'à Déclenchement TTT et la mobilité de l'Equipement Utilisateur UE (105).

12. Système selon la revendication 11, dans lequel la demande de transfert intercellulaire est envoyée après expiration de l'intervalles temps périodique.

13. Système selon la revendication 9, dans lequel la moyenne pondérée est calculée à l'aide d'une équation

$$RSRP_n = \frac{\sum_{i=0}^{k} w_i MR_i}{\sum_{i=0}^{k} w_i},$$ où $w_i$ indique une pondération incrémentielle, $MR_i$ indique des valeurs RSRP reçues pour la pluralité de cellules voisines, $k$ indique les intervalles de temps périodiques de la réception des valeurs RSRP et $RSRP_n$ est la moyenne pondérée des valeurs RSRP.

14. Système selon la revendication 9, dans lequel l'Equipement Utilisateur UE (105) reçoit un état de la demande de transfert intercellulaire en provenance de la cellule cible ayant la moyenne pondérée la plus élevée des valeurs RSRP.

15. Système selon la revendication 14, dans lequel l'unité de commande exécute en outre les instructions de programmes pour sélectionner une cellule voisine ayant la moyenne pondérée la plus élevée suivante RSRP en tant que cellule candidate suivante préférée pour envoyer la demande de transfert intercellulaire, dans lequel la cellule voisine ayant la moyenne pondérée la plus élevée suivante RSRP est sélectionnée lorsque la cellule voisine ayant la moyenne pondérée la plus élevée RSRP indique l'échec de la demande de transfert intercellulaire.

**FIGURE 1**

**FIGURE 2**

Serving cell (102)

Controller (110)

Interface (112)

Memory (114)

**FIGURE 3**

FIGURE 4

FIGURE 5

**FIGURE 6**

START

Receive Measurement Report (MR) (602)

MR count >=1 for UE (604)

No

Compute RSRP$_n$ (614)

Modify parameters as per UE speed scaling factors (616)

Check for
RSRP$_s$ + PeriodicInterval$_{Hys}$ < RSRP$_{s\ threshold}$
RSRP$_n$ - PeriodicInterval$_{Hys}$ > RSRP$_{n\ threshold}$
RSRP$_n$ - RSRP$_s$ > Periodic Interval$_{Hys}$ (618)

Start periodic interval$_{TTT}$ Timer and increment MR (620)

Yes

Periodic interval expired (606)

Yes

Select neighbour cell having highest weighted average of RSRP as target cell (610)

Select preferred next candidate cell (612)

No

Compute and update RSRP$_n$ (608)

End

**EP 3 029 996 B1**

**REFERENCES CITED IN THE DESCRIPTION**

**Patent documents cited in the description**

*   US 2014045500 A